# EUROPÄISCHE PATENTSCHRIFT

(11) **EP 3 418 839 B1**
(45) Veröffentlichungstag und Bekanntmachung des Hinweises auf die Patenterteilung: **13.10.2021**
(21) Anmeldenummer: 17177504.2
(22) Anmeldetag: 22.06.2017
(51) Int. Cl.: G05B 23/02, G05B 19/042, G06F 3/0485, G06T 15/00, G06F 3/0488

(54) **VERFAHREN ZUR ÜBERWACHUNG EINER AUTOMATISIERUNGSANLAGE**
METHOD FOR MONITORING AN AUTOMATION ASSEMBLY
PROCÉDÉ POUR SURVEILLER UNE INSTALLATION D'AUTOMATISATION

(43) Veröffentlichungstag der Anmeldung: 26.12.2018
(73) Patentinhaber: Enisco by Forcam GmbH, 68789 St. Leon-Rot (DE)
(72) Erfinder: Ochs, Dr. Ullrich, 71088 Holzgerlingen (DE); Stumpfegger, Thomas, San Jose, CA California 95134 (US); Häußler, Fabian, 71034 Böblingen (DE)
(74) Vertreter: 2K Patentanwälte Blasberg Kewitz & Reichel

(56) Entgegenhaltungen:
- WO-A1-2006/001629
- WO-A2-03/001334
- DE-A1-102012 102 749
- US-B1- 6 282 455
- US-B2- 7 817 150

## Beschreibung

Die Erfindung betrifft ein Verfahren zur Überwachung einer Automatisierungsanlage, umfassend: Rendern, durch einen Prozessor, eines Bildes aus einer zumindest einen Teil der Automatisierungsanlage darstellenden, dreidimensionalen Szene auf Basis von Positionsdaten und Blickrichtungsdaten, Darstellen des Bildes auf einer Anzeigeeinheit, wobei die Automatisierungsanlage eine Vielzahl von Komponenten umfasst, und wobei in einem Datenspeicher eine Baumstruktur hinterlegt wird, in der den Komponenten der Automatisierungsanlage jeweils Knoten zugeordnet sind. Sie betrifft weiter ein Computerprogrammprodukt und ein Leitsystem.

Automatisierungsanlagen sind Industrieanlagen, in denen Produktions- und Verarbeitungsschritte voll- oder teilautomatisiert erfolgen. Je nach Art der hergestellten oder verarbeiteten Produkte kann eine Automatisierungsanlage höchst individuell ausgestaltet sein. In der Regel besteht sie jedoch aus Verarbeitungsstationen, zu denen die zu verarbeitenden Produkte oder deren Vorstufen mittels einer Fördereinrichtung in einer bestimmten Abfolge gebracht und dort bearbeitet werden. Verarbeitungsstationen und Fördereinrichtung bilden die Komponenten der Automatisierungsanlage. Eine solche Automatisierungsanlage ist z.B. eine Lackierlinie für Kraftfahrzeuge. Die Verarbeitungsstationen sind in diesem Fall Stationen an denen eine spezifische, im Lackierprozess vorgesehene Aufgabe durchgeführt wird, d.h. Vorbehandlung, Aufbringen von Grundierung, Füller, Basislack und Klarlack. An jeder Station sind hierfür entsprechende Maschinen wie z.B. Lackierroboter vorhanden. Die Fahrzeugkarossen werden automatisiert mittels bekannten Förderelementen von Station zu Station gebracht.

Die Steuerung und Überwachung einer Automatisierungsanlage erfolgt typischerweise an einem Leitstand, wo unter Mitwirkung eines Benutzers mittels entsprechender Daten aus der Anlage die Prozessabläufe überwacht und ggf. beeinflusst werden. Ein Leitstand verfügt hierzu über ein oder mehrere Geräte oder Verbindungen zu Geräten an den verschieden Stationen der Automatisierungsanlage zum Messen, Regeln, Steuern, Anzeigen, Alarmieren, Registrieren, Schalten oder Rechnen. Die Anzeige des Prozesses z.B. in der Art von Schaufließbildern erfolgt hierbei in der Regel über verschiedene Anzeigeeinheiten wie z.B. Bildschirme. In neuester Zeit bietet sich durch das Aufkommen mobiler Geräte wie z.B. Tablets und Laptops auch die Möglichkeit der Anzeige und Steuerung von Prozessen auf solchen mobilen Geräten, wobei der Benutzer sich frei in der Automatisierungsanlage bewegen kann. Auch ist es möglich, eine Fernüberwachung der Anlage durchzuführen, so dass sich Leitstand oder mobiles Gerät nicht notwendigerweise im Nahbereich der Automatisierungsanlage befinden müssen.

Größtenteils werden Automatisierungsanlagen auf den Anzeigeeinheiten zur Zeit durch zweidimensionale Darstellungen gezeigt. Produkte und deren Bestandteile werden oft nur angedeutet. Sofern dreidimensionale Darstellungen verwendet werden, sind diese oft statisch und zeigen eine pseudoperspektivische Sicht (oft auch als 2½-D bezeichnet). Eine derartige Darstellung ist für den Benutzer gerade auf mobilen Geräten vor Ort in der Anlage häufig wenig intuitiv.

In jüngster Zeit wird daher dazu übergegangen, auf der Anzeigeeinheit die Automatisierungsanlage in echter dreidimensionaler Darstellung inklusive aller Maschinen, Beförderungsanlagen sowie aller Produkte vor und nach dem Zusammenbau aller Einzelteile darzustellen. Ein entsprechendes Verfahren ist dem Fachmann beispielsweise aus der US 7,817,150 B2 bekannt. Die entsprechenden Techniken des 3D-Renderings oder der 3D-Bildsynthese sind dem Fachmann ebenfalls bekannt. Grundlage hierfür bildet eine datenseitige dreidimensionale Beschreibung der Komponenten der Automatisierungsanlage, die idealerweise maßstabsgetreu ist. Die Summe dieser Daten wird als Szene bezeichnet. Die Modellierung der Komponenten und ihrer Subelemente der Automatisierungsanlage innerhalb der Szene erfolgt mittels geometrischer Modellierung. Die entsprechenden Daten werden dann in einen geeigneten Grafikprozessor geladen und dort wird dann zusammen mit Positions- und Blickrichtungsdaten mit bekannten Methoden der Computergrafik ein Bild der Automatisierungsanlage bzw. des im Blickfeld liegenden Teils der Automatisierungsanlage mit ihren Komponenten gerendert. Aus der US 6,282,455 B1 ist es bekannt, hierzu in einem Datenspeicher eine Baumstruktur zu hinterlegen, in der den Komponenten der Automatisierungsanlage jeweils Knoten zugeordnet sind.

Im Bereich von Leitständen für Automatisierungsanlagen ergibt sich hierbei jedoch das Problem, dass die zu darzustellende und zu verarbeitende Informationsdichte immens ist. Auf der einen Seite soll das Zusammenwirken der einzelnen Stationen der Automatisierungsanlage und der korrekte Produktionsablauf darstellbar und überprüfbar sein können, andererseits soll aber auch jede einzelne Station mit ihren Elementen darstellbar und überprüfbar sein, bis hinunter zu einzelnen Bauteilen von Elementen einer Station. Die Daten der dreidimensionalen Szene haben also notwendigerweise einen vergleichsweise hohen Detailgrad. Dies kann jedoch dazu führen, dass das Laden der einzelnen Objekte eines Bildes zum Rendering einen erheblichen Verarbeitungsaufwand innerhalb des Computersystems bedeutet und damit entweder vergleichsweise lange dauert, oder extrem teure und energieaufwändige Hardware verwendet werden muss.

Es ist daher Aufgabe der Erfindung, ein Verfahren der eingangs genannten Art anzugeben, welches einerseits alle für die Aufgaben der Überwachung einer Automatisierungsanlage nötigen Details verarbeitet und darstellt, und andererseits die benötigte Rechenkapazität minimiert.

Diese Aufgabe wird erfindungsgemäß dadurch gelöst, dass eine Fokuskomponente ermittelt wird, und aus der Szene nur diejenigen Komponenten des Teils der Automatisierungsanlage gerendert werden, deren jeweils zugeordnete Knoten in der Baumstruktur nur einen vorbestimmten Maximalabstand von dem der Fokuskomponente zugeordneten Knoten aufweisen.

Die Erfindung geht von der Überlegung aus, dass eine Reduzierung der benötigten Rechenleistung für das Rendering möglich wäre, wenn nicht sämtliche Komponenten der Automatisierungsanlage im Blickfeld gerendert werden, sondern nur eine Auswahl. Hierbei wurde erkannt, dass in der Regel nicht sämtliche Informationen gleichzeitig vom Benutzer benötigt werden, sondern erschon begrenzt durch das menschliche Aufnahmevermögen - ausschließlich abhängig von seinem aktuellen Interesse nur eine Untermenge der verfügbaren Komponenten in der Darstellung benötigt. Dazu wird zunächst ermittelt, welche Komponente für den Benutzer gerade von Interesse ist, d.h. es wird zunächst eine Fokuskomponente ermittelt. Zur Entscheidung, welche Komponenten nun gerendert werden, werden alle Komponenten der Automatisierungsanlage, d.h. alle in der Szene vorhandenen Objekte in mindestens einer Baumstruktur miteinander verknüpft.

Der Begriff Baumstruktur wird in der vorliegenden Anmeldung in der üblichen Definition aus der Informatik verwendet, d.h. eine Datenstruktur, mit der sich hierarchische Strukturen abbilden lassen. Die durch die Hierarchie vorgegebenen Objekte nennt man Knoten. Typischerweise speichert jeder Knoten ausgehend von einem ersten Knoten, der Wurzel, eine Liste von Verweisen auf die ihnen untergeordneten Knoten. Diese Verweise heißen Kanten. Es ist dann üblich, bei den untergeordneten Knoten von Kindern und bei dem verweisenden Knoten von einem Elternteil zu sprechen. Hierdurch wird auch ein Abstand zwischen zwei Knoten definiert, nämlich die Anzahl der Kanten, entlang derer man sich bewegen muss, um von dem einem Knoten zum anderen Knoten zu gelangen.

Vorliegend kann beispielsweise die gesamte Automatisierungsanlage der Wurzel der Baumstruktur zugeordnet werden. Deren Kinder können die einzelnen Stationen der Automatisierungsanlage und/oder die Fördereinrichtungen sein. Kindknoten einer Station können einzelne Komponenten der Station wie z.B. ein Roboter sein. Kindknoten des Roboterknotens können dessen einzelne Gelenkbauteile etc. sein. Dem Fachmann wird klar sein, wie er die Hierarchie der Komponenten einer Automatisierungsanlage sinnvoll in einer Baumstruktur anordnen kann.

Bei einer Gruppe mehrerer gemeinsam überwachter Automatisierungsanlagen könnte alternativ entweder eine übergeordnete Struktur die Wurzel bilden, oder der Wurzel wird keine physische Komponente zugeordnet. Hier würde die Wurzel dann mehrere Anlagen unter sich vereinen. Auch könnten bei mehreren Anlagen entsprechend mehrere parallele Baumstrukturen vorgesehen sein, die sich teilweise überschneiden, d.h. einzelne Komponenten könnten in zwei Baumstrukturen repräsentiert sein.

Darüber hinaus können mehrere Baumstrukturen vorgesehen sein, die sich nach inhaltlichen Gesichtspunkten, d.h. hinsichtlich Auswahl der enthaltenen Komponenten und deren hierarchischer Gliederung unterscheiden. Die Baumstruktur könnte z.B. hinsichtlich der räumlichen Struktur organisiert sein, hinsichtlich einer Netzwerktopologie oder einer anderweitigen logischen Gruppierung. Im Rahmen des hier beschriebenen Verfahrens kann dann z.B. je nach Rolle des Benutzers eine der Baumstrukturen für die Darstellung ausgewählt werden.

Liegt die Baumstruktur vor, so kann nach Ermittlung der Fokuskomponente der dieser Fokuskomponente zugeordnete Knoten identifiziert werden. Ausgehend von diesem Knoten werden alle Knoten in einem vorbestimmten Maximalabstand, d.h. die nur eine bestimmte maximale Anzahl an Kanten entfernt sind, gesucht. Während des Renderings werden dann nur die diesen Knoten zugeordneten Komponenten im entstehenden Bild gerendert.

In vorteilhafter Ausgestaltung des Verfahrens wird die Fokuskomponente aus einer Benutzereingabe ermittelt. Mit anderen Worten: Die Fokuskomponente wird direkt durch den Benutzer ausgewählt. Durch ein derartiges Verfahren ist die Ermittlung der Fokuskomponente auf besonders einfache und zuverlässige Weise möglich, da die Veränderung der Fokuskomponente nicht kontinuierlich, sondern gesteuert erfolgt. Der Benutzer kann nämlich direkt die für ihn derzeit interessante Komponente der Automatisierungsanlage eingeben und so auswählen. Dies kann beispielsweise durch Klicken/Antippen der entsprechenden Komponente in dem derzeit dargestellten Bild geschehen. Alternativ kann auch eine tabellarische Auflistung verschiedener Komponenten dargestellt werden, beispielsweise auch mit einer Markierung von Komponenten, bei denen derzeit - z.B. aufgrund einer Fehlfunktion - ein Benutzereingriff erforderlich ist. Die Auswahl kann dann ebenfalls durch Klicken/Antippen der Komponente in der tabellarischen Darstellung erfolgen. Schließlich kann eine Auswahl auch mittels einer Suchfunktion erfolgen.

In weiterer vorteilhafter Ausgestaltung des Verfahrens werden für Eltern- und Kindknoten des der Fokuskomponente zugeordneten Knotens unterschiedliche Maximalabstände vorbestimmt. Hierdurch wird dem Umstand Rechnung getragen, dass ggf. für den Benutzer übergeordnete Komponenten von geringerem Interesse sind, als untergeordnete Komponenten der aktuellen Fokuskomponente. Durch die Bestimmung unterschiedlicher Maximalabstände für Kind- und Elternknoten kann dies dazu genutzt werden, den Ressourcenverbrauch des Renderings noch weiter zu reduzieren, indem z.B. ein geringerer Maximalabstand für Elternknoten vorgegeben wird. Dadurch wird für untergeordnete Komponenten zwar eine hohe Detailtreue möglich, ohne jedoch auch entsprechend viele übergeordnete Komponenten rendern zu müssen.

Vorteilhafterweise wird dabei der jeweilige Maximalabstand auf Basis einer durch einen Benutzer getroffenen Detailniveau-Einstellung vorbestimmt. Eine derartige Bestimmung nimmt in besonderer Weise Rücksicht auf die Bedürfnisse des Benutzers. Durch eine benutzerseitige Einstellung des Detailniveaus wird ermöglicht, dass der Benutzer priorisieren kann, ob er eine höhere Detailtiefe oder ein schnelleres Rendering bevorzugt. Die Detailniveau-Einstellung kann dabei direkt den oder die Maximalabstände festlegen, oder aber indirekt auf eine automatisierte Bestimmung der Maximalabstände, die von weiteren Umständen abhängen kann, Einfluss nehmen.

Eine weitere Reduzierung der für den Renderingvorgang benötigten Rechenkapazität wird vorteilhafterweise dadurch erreicht, dass eine Komponente, deren zugeordneter Knoten ein Elternknoten des der Fokuskomponente zugeordneten Knotens ist, in dem Bild nur im Grundriß oder Umriß dargestellt wird. Da die übergeordnete Komponente der Fokuskomponente in der aktuellen Ansicht für den Benutzer häufig nur von untergeordnetem Interesse ist und eher zur räumlichen Orientierung in Bezug auf die Fokuskomponente dient, kann es ausreichend sein, nur den Grundriß/Umriß der übergeordneten Komponente darzustellen und nicht die gesamte dreidimensionale Ansicht der übergeordneten Komponenente zu rendern. Dadurch wird wertvolle Rechenkapazität eingespart. Eine derartige Ausführung des Verfahrens kann z.B. durch eine entsprechende Grafikeinstellungs-Option, die durch einen Benutzer anwählbar ist, in einer entsprechenden Software aktiviert werden.

Insbesondere bei hohem Detailgrad oder bei vergleichsweise leistungsschwacher Hardware kann das Nachladen, d.h. der Datentransfer, der Aufbau der Modelle und deren Übergabe in den Grafikprozessor jedoch dennoch so rechenaufwändig sein, dass für den Benutzer wahrnehmbare Verzögerungen unvermeidlich sind. Um dem Benutzer dennoch anzuzeigen, dass eine Komponente noch nicht mit allen untergeordneten Komponenten vollständig dargestellt wurde, wird in vorteilhafter Ausgestaltung des Verfahrens während des Ladens einer ersten Komponente aus der Szene, deren zugeordneter Knoten ein Kindknoten einer zweiten Komponente aus der Szene ist, die zweite Komponente gegenüber einer vorgegebenen Normaldarstellung in dem Bild graphisch abgewandelt, und erst nach vollständigem Laden der ersten Komponente wird die zweite Komponente in der vorgegebenen Normaldarstellung dargestellt. Mit anderen Worten: Solange noch ein Datenübertragungsprozess von untergeordneten Komponenten läuft, die noch nicht vollständig im entstehenden Bild dargestellt sind, wird die übergeordnete Komponente anders dargestellt, z.B. in einer abgewandelten Farbe oder durch eine bewegte Signalisierung wie z.B. Blinken. Hierdurch ist dem Benutzer bewusst, dass der Ladevorgang noch nicht abgeschlossen ist und noch weitere Komponenten hinzukommen.

In weiterer vorteilhafter Ausgestaltung des Verfahrens werden die Positionsdaten und Blickrichtungsdaten auf Basis der räumlichen Positionierung der Anzeigeeinheit ermittelt. Zwar soll - wie oben dargestellt - die 3D-Umgebung für den Benutzer frei navigierbar sein, jedoch kann es aufgrund der extremen Komplexität von Produktionsanlagen häufig schwierig sein, die dargestellte 3D-Umgebung in der realen Anlage wiederzufinden. Daher sollte bei mobilen Anzeigeeinheiten eine Möglichkeit geboten werden, die Positions- und Blickrichtungsdaten auf die aktuelle Position der Anzeigeeinheit und damit des Benutzers abzustimmen. Dies kann beispielsweise beim erstmaligen Ausführen des Verfahrens beim Aktivieren der Software erfolgen, oder aber durch Betätigen einer auf der Anzeigeeinheit vorgesehenen Schaltfläche. In beiden Fällen würde die 3D-Darstellung am aktuellen (realen) Ort und mit dem aktuellen Blickwinkel beginnen. Von dort könnte dann eine Art Bedienerführung durch die Anlage erfolgen, welcher der Bediener auch real folgt, beispielsweise der Fertigungsfolge entsprechend oder einer Fehlerhäufigkeit. Auch ermöglicht eine derartige Ermittlung der Positions- und Blickrichtungsdaten auf Basis der räumlichen Positionierung die Nutzung von Virtual Reality- oder Augmented Reality-Anzeigeeinheiten, wie beispielsweise VR-Brillen.

Eine weitere Reduzierung des Renderingaufwandes kann dadurch erreicht werden, dass vorteilhafterweise eine Anzahl von Kategorien definiert wird und einer Anzahl von Knoten der Baumstruktur eine oder mehrere Kategorien zugeordnet werden, wobei aus der Szene nur diejenigen Komponenten des Teils der Automatisierungsanlage für das Rendern in den Prozessor geladen werden, deren jeweils zugeordnete Knoten einer vorgegebenen Kategorie zugeordnet sind. Mit anderen Worten: Die Anlagenkomponenten unterliegen bei der Erstellung der erforderlichen Datenstrukturen bereits einer Art Kategorisierung. Beispielsweise können Kategorien sein: Medienelemente wie Leitungen, Kabel, Kanäle oder Förderelemente oder Verarbeitungsstationen. Sofern dann eine Bedienerauswahl wie z.B. Kategorie "Medien" erfolgt, werden nur noch diese Elemente wie beschrieben berücksichtigt. Alle anderen werden dann gar nicht - oder in einer Abwandlung vorteilhafterweise nur mit minimalem Rendering dargestellt. Die Kategorisierung ist unabhängig von der Auswahl der aktuellen Fokuskomponente sondern ist bereits in der Baumstruktur hinterlegt. Bei Änderung der Kategorisierung ändert sich dann auch entsprechend die Darstellung.

Vorteilhafterweise ist das Verfahren interaktiv und das Rendering wird in Echtzeit durchgeführt. Hierzu werden vorteilhafterweise nach jeder Änderung der Positionsdaten oder der Blickrichtungsdaten durch eine Benutzereingabe die Verfahrensschritte des Renderns und des Darstellens erneut durchgeführt. Hierdurch ergibt sich für den Benutzer eine besonders komfortable Bedienung.

Bei einem derartigen Echtzeitverfahren ist es denkbar, den Maximalabstand für die zu rendernden Komponenten dynamisch zu bestimmen. Hierzu wird während des Renderns eine Leistungskenngröße für den Prozessor ermittelt, wobei bei der nächsten Durchführung des Renderns der jeweilige Maximalabstand auf Basis der Leistungskenngröße vorbestimmt wird. Mit anderen Worten: Es wird kontinuierlich die Renderingleistung ermittelt, z.B. über die Zeitdauer für einen Renderingprozess oder über andere Kenndaten des Prozessors, und die ermittelte Leistung geht in die Bestimmung des jeweiligen Maximalabstands ein. So kann vollkommen automatisch für weniger leistungsfähige Grafikhardware ein geringerer Maximalabstand verwendet werden

Die Benutzereingabe für die Veränderung der Positions- und Blickrichtungsdaten kann mit bekannten Techniken zur 3D-Navigation z.B. auf Touchscreens mit zwei Fingern erfolgen. In besonders vorteilhafter Ausgestaltung des Verfahrens erfolgt sie jedoch derart, dass die Anzeigeeinheit berührungsempfindlich ist und ein Bildschirmrandbereich vorgesehen wird, wobei bei einer horizontalen Berührungseingabe im Bildschirmrandbereich eine longitudinale Veränderung der Blickrichtungsdaten durchgeführt wird und/oder einer vertikalen Berührungseingabe im Bildschirmrandbereich eine latidudinale Veränderung der Blickrichtungsdaten durchgeführt wird. Hierdurch wird erreicht, dass der Benutzer - durch die Berührung im Bildschirmrandbereich - die Blickrichtung verändern kann ohne den Blick auf die Automatisierungsanlage bzw. ihre Komponenten selbst zu verlieren.

Vorteilhafterweise umfasst der Bildschirmrandbereich dabei einen horizontalen und einen vertikalen Balkenbereich, wobei die horizontale Berührungseingabe im horizontalen Balkenbereich erfolgt und die vertikale Berührungseingabe im vertikalen Balkenbereich erfolgt. Eine derartige Anordnung der Berührungsbereiche für die Blickrichtungsveränderung ist besonders intuitiv und technisch einfach umzusetzen.

Ein Computerprogrammprodukt umfasst vorteilhafterweise Softwarecodeabschnitte, die, wenn sie auf einem Prozessor ausgeführt werden, den Prozessor zum Ausführen des beschriebenen Verfahrens veranlassen. Ein derartiges Computerprogramm kann beispielsweise als sogenannte "App" für Tabletcomputer ausgestaltet sein.

In einem Leitsystem für eine Automatisierungsanlage, umfassend mindestens einen Prozessor und eine Anzeigeeinheit, wird vorteilhafterweise auf dem mindestens einen Prozessor das beschriebene Verfahren ausgeführt. Der Prozessor ist dabei als Grafikprozessor ausgebildet, in den die Modelldaten für die Komponenten z.B. aus einer zentralen Prozessoreinheit geladen werden.

Vorteilhafterweise ist die Anzeigeeinheit auf einer mobilen, mit der Automatisierungsanlage und/oder weiteren Komponenten des Leitsystems durch eine drahtlose Kommunikationsverbindung verbundenen Einheit angeordnet. Eine derartige Einheit kann z.B. ein Tabletcomputer sein.

Die mit der Erfindung erzielten Vorteile bestehen insbesondere darin, dass durch die Auswahl der darzustellenden Komponenten einer Automatisierungsanlage in einer 3D-Darstellung anhand deren Zuordnung zu einer Baumstruktur einerseits die für das Rendering benötigte Rechenkapazität minimiert wird, und andererseits für den Benutzer eine besonders intuitive und übersichtliche Darstellung erzeugt wird. Dadurch wird insbesondere ein flüssiges Echtzeitrendering mit entsprechender Interaktion möglich, so dass die Darstellung durch Translationen, Rotationen sowie durch Zoomen so beeinflusst werden kann, dass alle Orte von Interesse in geeignetem Maßstab gezeigt werden können. Die dreidimensionale Darstellung der Fabrik und ihrer Anlagen erlaubt eine wesentlich intuitivere Navigation. Problematische Situationen können viel verständlicher in ihrem Umfeld angezeigt werden. Neue Mitarbeiter können generelle Zusammenhänge in der Fabrik wesentlich leichter erkennen. Auch für Kunden ist die Nachvollziehbarkeit der Herstellung ihres Produktes innerhalb der Fabrik eine sehr willkommene Darstellung.

Ausführungsbeispiele der Erfindung werden anhand von Zeichnungen näher erläutert. Darin zeigen:
- FIG 1: eine schematische Darstellung einer Automatisierungsanlage mit verschiedenen Komponenten und einem Leitsystem mit mobiler Einheit,
- FIG 2: ein dreidimensionales gerendertes Bild eines Teils der Automatisierungsanlage,
- FIG 3: ein dreidimensionales gerendertes Bild des Teils der Automatisierungsanlage mit höherem Detailgrad,
- FIG 4: eine Baumstruktur, deren Knoten den Komponenten der Automatisierungsanlage zugeordnet sind,
- FIG 5: eine mobile Einheit mit berührungsempfindlicher Anzeigeeinheit, und
- FIG 6: ein weiteres dreidimensionales Bild eines Teils der Automatisierungsanlage während des Renderns.

Gleiche Teile sind in allen Figuren mit denselben Bezugszeichen versehen.

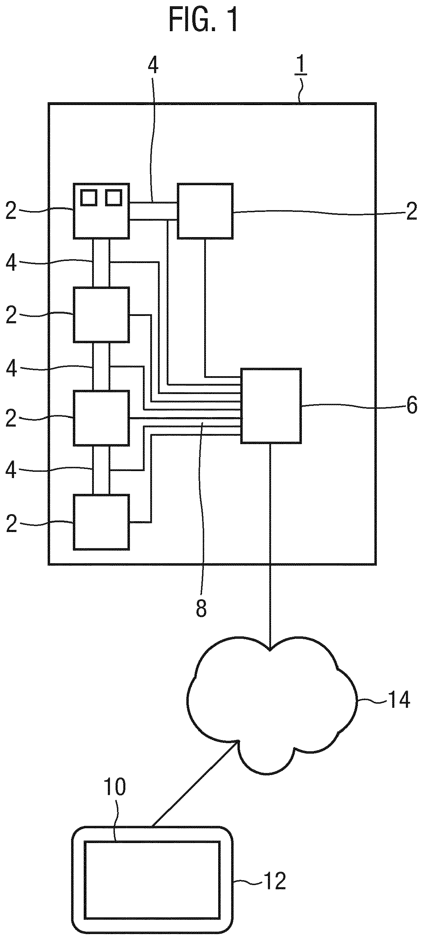

FIG 1 zeigt schematisch eine Automatisierungsanlage 1, d.h. eine Industrieanlage, in der Produktions- und Verarbeitungsschritte automatisiert erfolgen. Die Industrieanlage umfasst eine Vielzahl von Komponenten, darunter Verarbeitungsstationen 2, zu denen zu verarbeitende Produkte oder deren Vorstufen gebracht werden. Dies geschieht mittels Fördereinrichtungen 4 wie z.B. Förderbändern.

Die Steuerung und Überwachung der Automatisierungsanlage 1 erfolgt in einem Leitsystem 6, wo unter Mitwirkung eines Benutzers mittels entsprechender Daten aus der Automatisierungsanlage 1 die Prozessabläufe überwacht und ggf. beeinflusst werden. Das Leitsystem 6 verfügt hierzu über ein oder mehrere Geräte oder Datenverbindungen 8 zu Geräten an den verschiedenen Komponenten 2, 4 der Automatisierungsanlage 1 zum Messen, Regeln, Steuern, Anzeigen, Alarmieren, Registrieren, Schalten oder Rechnen.

Die Anzeige des Prozesses erfolgt hierbei über eine Anzeigeeinheit 10, im Ausführungsbeispiel ausgebildet als Bildschirm auf einer mobilen Einheit 12, hier einem Tabletcomputer, der als Teil des Leitsystems 6 mit diesem über eine drahtlose Datenverbindung 14 verbunden ist. Dies bietet dem Benutzer die Möglichkeit der Anzeige und Steuerung der Automatisierungsanlage 1 während er sich frei in der Automatisierungsanlage 1 bewegen kann.

Auf der Anzeigeeinheit 10 wird die Automatisierungsanlage 1 in echter dreidimensionaler Darstellung inklusive aller Komponenten 2, 4 sowie aller derzeit bearbeiteten Produkte vor und nach dem Zusammenbau dargestellt. Die Erzeugung des jeweiligen Bildes auf der Anzeigeeinheit 10 erfolgt durch übliche Techniken des Renderings in einem nicht näher dargestellten (Grafik-)Prozessor in der mobilen Einheit 12. Das Rendering erfolgt in Echtzeit, so dass einerseits die Darstellung interaktiv ist, d.h. der Benutzer kann durch entsprechende Eingaben Blickwinkel und Position verändern, wobei sich die 3D-Darstellung unmittelbar entsprechend verändert, und andererseits ist dadurch auch ein dynamisches Abbild der Automatisierungsanlage 1 möglich, in der tatsächlich bewegte Komponenten wie z.B. zu verarbeitende Produkte auch in Echtzeit an ihrem jeweils aktuellen Ort dargestellt und mitbewegt werden. Hierfür und für alle anderen im Folgenden dargestellten Funktionen ist im Leitsystem 6 und der mobilen Einheit 12 eine entsprechende Software installiert.

Die Darstellung der Automatisierungsanlage 1 ist dabei möglichst maßstabsgetreu, d.h. alle Komponenten 2, 4 werden zumindest schematisch in ihrer tatsächlichen Größe und Form sowie in maßstabsgetreuer Lage und Abstand zueinander dargestellt. Hiervon können - zum Zwecke einer verbesserten Darstellung - Abweichungen vorgenommen werden, solange für den Benutzer noch identifizierbar ist, welcher realen Komponente eine Darstellung entspricht. Grundlage hierfür bildet eine datenseitige dreidimensionale Beschreibung der Komponenten 2, 4 der Automatisierungsanlage 1, die sogenannte Szene. Diese wurde mittels geometrischer Modellierung erzeugt. Die entsprechenden Modelldaten werden von einer zentralen Prozessoreinheit ausgewählt und in einen Grafikprozessor der mobilen Einheit 12 geladen. Die Modeldaten können dabei auch auf einem zentralen Server des Leitsystems 6 hinterlegt sein und bedarfsweise an die mobile Einheit 12 übertragen werden. Zusammen mit jeweils aktuellen Positions- und Blickrichtungsdaten wird dann -je nach Leistungsfähigkeit des Grafikprozessors - zyklisch, idealerweise mehrfach pro Sekunde mit bekannten Methoden der Computergrafik der im Blickfeld liegende Teil der Automatisierungsanlage 1 mit ihren Komponenten 2, 4 durch den Grafikprozessor gerendert und auf der Anzeigeeinheit 10 dargestellt.

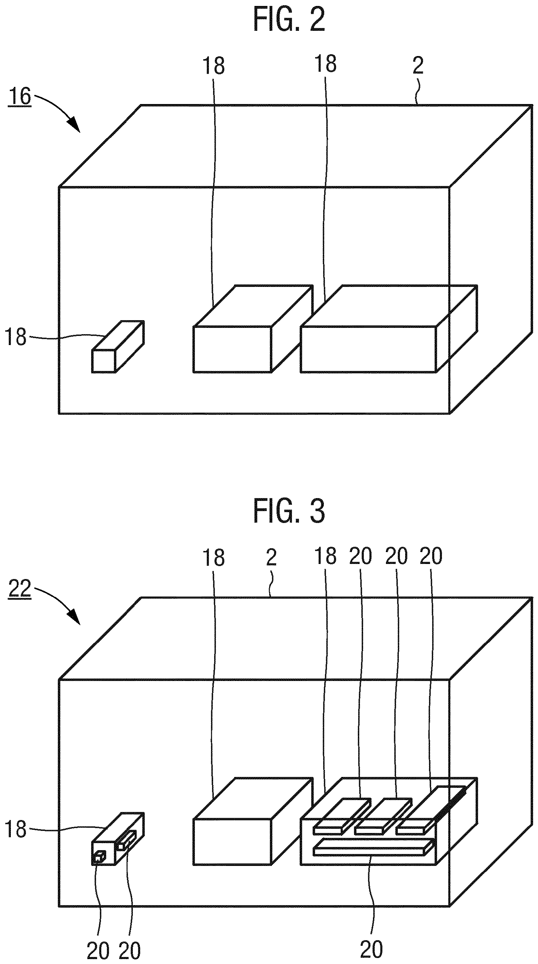

Beispielhaft ist ein derartiges gerendertes Bild 16, wie es auf der Anzeigeeinheit 10 dargestellt wird, in FIG 2 gezeigt. Der Einfachheit der Darstellung halber sind hier und in der Folge sämtliche Komponenten 2, 4 der Automatisierungsanlage 1 als Quader gezeigt, sie werden jedoch in der Realität komplexere Formen aufweisen. Das Bild 16 zeigt eine gerenderte Darstellung einer Verarbeitungseinheit 2, die drei Subkomponenten 18 umfasst. Dies ist in jeder Automatisierungsanlage 1 der Fall: Jede Verarbeitungsstation 2 wird aus verschiedenen Teilen (Roboterarme, Bearbeitungsmaschinen etc.) bestehen. Diese sind in der 3D-Darstellung im Bild 16 ebenfalls weitgehend maßstabsgetreu wiedergegeben und werden vom Prozessor gerendert.

Die Darstellung der Verarbeitungsstation 2 ist dabei in der FIG 2 halbtransparent, so dass die innenliegenden Subkomponenten 18 sichtbar sind. Eine solche Darstellung ist im Ausführungsbeispiel bei der Auswahl der Verarbeitungsstation 2 als Fokuskomponente während des Übergangs in die neue Darstellung vorgesehen, wie im Folgenden noch erläutert wird.

Jedoch werden in der Realität auch die einzelnen Subkomponenten 18 wiederum aus untergeordneten Komponenten 20 bestehen. Dies ist beispielhaft im Bild 22 in FIG 3 gezeigt, in dem zwei der drei Subkomponenten 18 wiederum mehrere untergeordnete Komponenten 20 umfassen. Ein Roboterarm besteht z.B. aus einer Vielzahl von Motoren, Greifern, Armgelenken etc. Dies lässt sich beliebig fortsetzen. Jeder Motor besteht wieder aus verschiedenen Teilen, diese Teile können wiederum verschiedene Komponenten umfassen etc. Insoweit diese einzelnen Teile vom Leitsystem 6 der Automatisierungsanlage 1 erfasst sind, muss für jede dieser Komponenten und Unterkomponenten ein Objekt in der die Automatisierungsanlage 1 darstellenden Szene hinterlegt und dieses beim Rendern im Bild 16, 22 dargestellt werden, damit vom Benutzer eine entsprechende Analyse durchgeführt werden kann und ggf. Steuereingriffe vorgenommen werden können.

Hierbei ergibt sich das Problem, dass das Rendering des Bildes 16, 22 sehr leistungsfähige Hardware erfordert, und insbesondere auch das Laden der Modelldaten in den Grafikprozessor vergleichsweise hohe Datenraten erfordert. Dies gilt gerade bei Leitsystemen 6, die sehr große und/oder komplexe Automatisierungsanlagen 1 steuern, und bei denen entsprechend eine vergleichsweise hohe Anzahl von Objekten in der datenseitig gespeicherten Szene vorhanden ist.

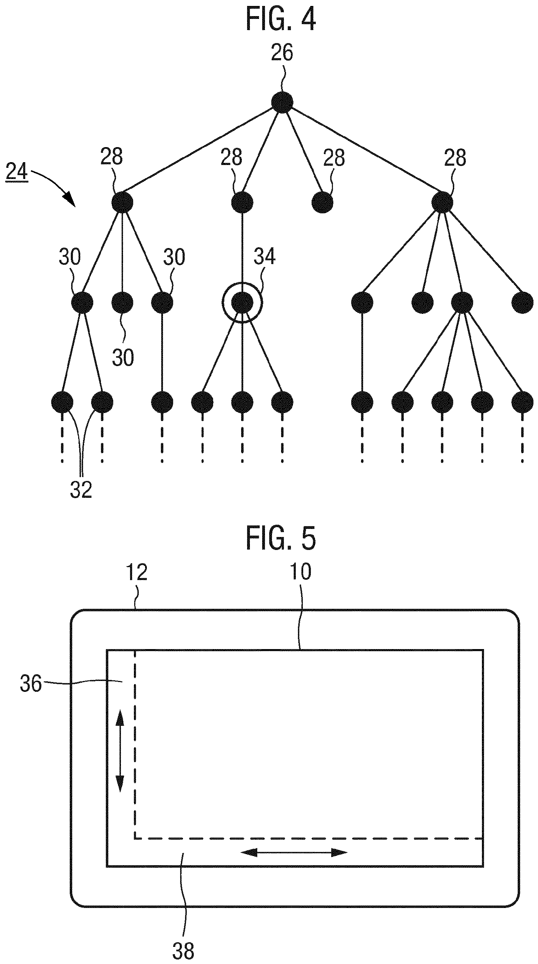

Zur Lösung dieses Problems wird datenseitig eine Baumstruktur 24 geschaffen und in einem Speicher des Leitsystems 6 abgelegt. Die Baumstruktur 24 ist ausschnittsweise in FIG 4 gezeigt und steht lediglich beispielhaft für mehrere mögliche Baumstrukturen 24, die je nach Anwendungszweck und Rolle des jeweiligen Benutzers hinsichtlich Inhalt und Hierarchie anders ausgestaltet sein können. Auch können mehrere parallele Baumstrukturen 24 datenseitig hinterlegt sein.

Im Ausführungsbeispiel ist die Wurzel 26 der Baumstruktur 24 der Automatisierungsanlage 1 zugeordnet, die weiteren in Hierarchieebenen eingeordneten Knoten 28, 30, 32 sind jeweils einer der Komponenten, d.h. einer Verarbeitungsstation 2, einer Fördereinrichtung 4, einer Subkomponente 18 und sonstigen Komponente 20 zugeordnet. Jede vom Leitsystem 6 angesprochene und als Objekt in der datenseitig gespeicherten Szene für das Rendering hinterlegte Komponente der Automatisierungsanlage 1 wird einem Knoten 28, 30, 32 zugeordnet. Hierbei bildet die Hierarchie der Knoten 28, 30, 32 in der Baumstruktur die oben erläuterte tatsächliche Hierarchie der Komponenten in der Automatisierungsanlage 1 ab.

Mittels der Baumstruktur 24 erfolgt nun beim Echtzeit-Rendering des Bildes 16, 22 auf der Anzeigeeinheit 10 eine Auswahl der darzustellenden Komponenten 2, 4, 18, 20. Zunächst wird hierzu eine Fokuskomponente ermittelt, d.h. eine Komponente, die für den Benutzer aktuell im Fokus steht. Dies geschieht durch direkte Benutzerauswahl, d.h. z.B. durch Klicken/Antippen der gewünschten Komponente in der 3D-Darstellung, in einer tabellarischen Aufstellung, oder durch eine Suchfunktion.

Es wird dann in der Baumstruktur 24 derjenige Knoten 34 ermittelt, der der ermittelten Fokuskomponente zugeordnet ist. Ausgehend von diesem Knoten 34 werden dann jeweils aufwärts und abwärts diejenigen Knoten 28, 30, 32 ermittelt, die von dem Knoten 34 der Fokuskomponente nur einen bestimmten Abstand aufweisen, d.h. die über eine bestimmte maximale Anzahl von Kanten erreichbar sind. Im Ausführungsbeispiel sind die Maximalabstände für über- bzw. untergeordnete Komponenten unterschiedlich. Im Anschluss werden dann nur die diesen ermittelten Knoten 28, 30, 32 zugeordneten Komponenten 2, 4, 18, 20 gerendert und im Bild 16, 22 dargestellt. Dies erfolgt dadurch, dass nur die Modelldaten dieser ermittelten Knoten 28, 30, 32 in den Grafikprozessor zum Rendering übertragen werden.

In unterschiedlichen, nicht bildlich dargestellten Ausführungsbeispielen sind unterschiedliche Bestimmungsverfahren für die Maximalabstände realisiert. In einem ersten Ausführungsbeispiel werden die Maximalabstände durch einen Benutzer direkt eingestellt. Hierfür wird eine Detailniveau-Einstellung durch den Benutzer durchgeführt, die direkt die Maximalabstände vorgibt oder aber aus der Detailniveau-Einstellung indirekt die Maximalabstände ermittelt. In einer zweiten Ausführungsform werden die Maximalabstände dynamisch ermittelt: Hierzu findet während des Rendervorgangs eine Leistungs- oder Geschwindigkeitsmessung des Renderns statt. Aus dem Ergebnis wird eine Leistungskennzahl ermittelt, die letztlich die Leistung des Prozessors bzw. dessen Performance beim Rendervorgang kennzeichnet. Auf Basis dieser Leistungskennzahl werden dann die Maximalabstände ermittelt, wobei bei besserer Leistung höhere Abstände gewählt werden und somit mehr Komponenten 2, 4, 18, 20 dargestellt werden. Dies kann auch dazu führen, dass abhängig vom momentanen Blickwinkel und der Anzahl der Subkomponenten der aktuellen Fokuskomponente die Maximalabstände verändert werden und nicht für alle konsekutiven Renderingvorgänge konstant sind.

Die Maximalabstände können auch je nach aktueller Situation angepasst werden. Im Ausführungsbeispiel sind z.B. während des Übergangs von einer Fokuskomponente zur nächsten andere Maximalabstände definiert. So wird nach einer Auswahl einer neuen Fokuskomponente (z.B. Verarbeitungsstation 2 in FIG 2) die neue Fokuskomponente halbtransparent dargestellt und die untergeordneten Komponenten gezeigt, wie in FIG 2 dargestellt (Erhöhung des Maximalabstandes in Richtung der untergeordneten Hierarchie). Danach erfolgt automatisiert ein Zoomvorgang, d.h. die neu ausgewählte Fokuskomponente wird in den Vordergrund gerückt, durch entsprechende Veränderung des Blickwinkels und Ortes. Erst danach werden übergeordnete Komponenten ausgeblendet (Verringerung des Maximalabstandes in Richtung der übergeordneten Hierarchie) oder nur im Grundriß dargestellt.

In den Ausführungsformen existiert zur weiteren Verbesserung der Performance darüber hinaus auch eine Einstellung, die durch den Benutzer anwählbar ist, und die dazu führt, dass in der Baumstruktur 24 übergeordnete Komponenten, d.h. Elternkomponenten der aktuellen Fokuskomponente nicht vollständig gerendert werden, sonderen nur deren Grundriss oder Umriss gerendert wird.

In anderen Ausführungsformen ist eine Anzahl von Kategorien definiert und einzelnen oder allen Knoten 28, 30, 32, 34 der Baumstruktur 24 sind eine oder mehrere Kategorien zugeordnet. Beispielsweise können Kategorien sein: Medienelemente wie Leitungen, Kabel, Kanäle oder Förderelemente oder Verarbeitungsstationen. Eine oder mehrere dieser Kategorien können dann vom Benutzer ausgewählt oder auf Basis einer Rolle des Benutzers automatisch ausgewählt werden. Beim Rendering werden dann aus der Szene nur diejenigen Komponenten des Teils der Automatisierungsanlage 1 für das Rendern in den Prozessor geladen, deren jeweils zugeordnete Knoten 28, 30, 32, 34 einer vorgegebenen Kategorie zugeordnet sind. Alle anderen werden dann gar nicht - oder nur mit minimalem Rendering dargestellt.

Die Eingabe und Veränderung der Positions- und Blickrichtungsdaten durch den Benutzer erfolgt im Ausführungsbeispiel über Eingaben auf der Anzeigeeinheit 10, die in FIG. 5 gezeigt ist. Der rechteckige Bildschirm der Anzeigeeinheit 10 ist berührungsempfindlich ausgestaltet. Am linken Rand des Bildschirms ist ein vertikaler Balkenbereich 36 angeordnet, der sich über die gesamte Höhe des Bildschirms erstreckt. Am unteren Rand des Bildschirms ist ein horizontaler Balkenbereich 38 angeordnet, der sich über die gesamte Breite des Bildschirms erstreckt. Die Balkenbereiche 36, 38 nehmen im Ausführungsbeispiel ca. 10 % der gesamten Bildschirmfläche ein, können aber auch schmaler oder breiter ausgeführt werden..

Bei einer horizontalen Bewegung eines die Anzeigeeinheit 10 berührenden Objekts, z.B. eines Fingers, wird eine longitudinale Veränderung der Blickrichtungsdaten durchgeführt. Analog wird bei einer vertikalen Bewegung im vertikalen Balkenbereich 36 eine latidudinale Veränderung der Blickrichtungsdaten durchgeführt. Die Veränderung der Positionsdaten kann z.B. durch Zoomen mit zwei sich aufeinander zu- bzw. voneinander wegbewegenden Fingern erfolgen. Hierdurch kann der Benutzer die jeweils interessierende Komponente 2, 4, 18, 20 in den Fokus bringen. Alternativ können die entsprechenden Orte/Komponenten auch direkt durch Suchfunktionen aufgesucht werden.

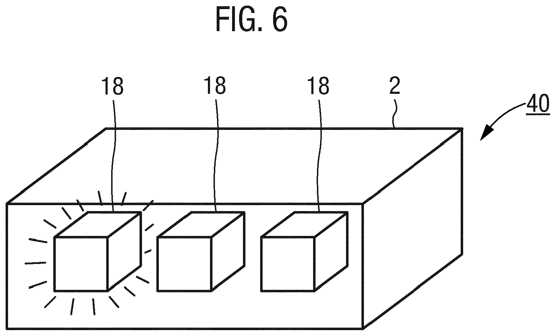

Während des Renderings kann es - trotz der oben dargestellten Maßnahmen zur Beschleunigung und der Auswahl von darzustellenden Komponenten - noch immer zu Wartezeiten beim Laden der Modelldaten von untergeordneten Komponenten 2, 4, 18, 20 kommen. Um dem Benutzer anzuzeigen, dass zu einer dargestellten Komponente noch Subkomponenten fehlen, diese jedoch nicht fertig geladen wurden, wird diese Komponente während des noch unvollständigen Ladevorgangs graphisch abgewandelt dargestellt. Dies ist in FIG 6 gezeigt, in der ein Bild 40 während des noch unvollständigen Ladevorgangs gezeigt ist. Die im Bild 40 linke Komponente 18 ist zwar bereits dargestellt, es fehlen jedoch noch untergeordnete Komponenten, die noch nicht fertig geladen und gerendert sind. Daher wird die linke Komponente 18 blinkend dargestellt. Nach vollständigem Laden und Rendern der Unterkomponenten wird die Komponente 18 dann in normaler Weise dargestellt.

In einer weiteren, nicht gesondert dargestellten Ausführungsform weist die mobile Einheit 12 Mittel zur räumlichen Lokalisierung innerhalb der Automatisierungsanlage 1 auf. Dadurch wird es ermöglicht, den Blickwinkel und den Standort in der 3D-Darstellung auf der Anzeigeeinheit 10 dem aktuellen Blickwinkel und Standort der mobilen Einheit 12 und damit des Benutzers anzupassen. Dies erfolgt beispielsweise beim Hochfahren der mobilen Eineit 12 oder beim Klicken/Antippen einer "Home"-Schaltfläche.

### Bezugszeichenliste

- 1: Automatisierungsanlage
- 2: Verarbeitungsstation
- 4: Fördereinrichtung
- 6: Leitsystem
- 8: Datenverbindung
- 10: Anzeigeeinheit
- 12: mobile Einheit
- 14: drahtlose Datenverbindung
- 16: Bild
- 18: Subkomponente
- 20: Komponente
- 22: Bild
- 24: Baumstruktur
- 26: Wurzel
- 28, 30:
- 32, 34: Knoten
- 36: vertikaler Balkenbereich
- 38: horizontaler Balkenbereich
- 40: Bild

## Patentansprüche

1. Verfahren zur Überwachung einer Automatisierungsanlage (1), umfassend:
Rendern, durch einen Prozessor, eines Bildes (16, 22, 40) aus einer zumindest einen Teil der Automatisierungsanlage (1) darstellenden, dreidimensionalen Szene auf Basis von Positionsdaten und Blickrichtungsdaten, Darstellen des Bildes (16, 22, 40) auf einer Anzeigeeinheit (10),
wobei die Automatisierungsanlage (1) eine Vielzahl von Komponenten (2, 4, 18, 20) umfasst, wobei in einem Datenspeicher eine Baumstruktur (24) hinterlegt wird, in der den Komponenten (2, 4, 18, 20) der Automatisierungsanlage (1) jeweils Knoten (28, 30, 32, 34) zugeordnet sind,
**dadurch gekennzeichnet, dass** eine Fokuskomponente ermittelt wird, wobei die Fokuskomponente eine Komponente beschreibt, die für den Benutzer aktuell im Fokus steht, und aus der Szene nur diejenigen Komponenten (2, 4, 18, 20) des Teils der Automatisierungsanlage (1) für das Rendern in den Prozessor geladen werden, deren jeweils zugeordnete Knoten (28, 30, 32, 34) in der Baumstruktur (24) nur
einen vorbestimmten Maximalabstand von dem der Fokuskomponente zugeordneten Knoten (28, 30, 32, 34) aufweisen.

2. Verfahren nach Anspruch 1, bei dem die Fokuskomponente aus einer Benutzereingabe ermittelt wird.

3. Verfahren nach einem der vorhergehenden Ansprüche, bei dem für Eltern- und Kindknoten des der Fokuskomponente zugeordneten Knotens (28, 30, 32, 34) unterschiedliche Maximalabstände vorbestimmt werden.

4. Verfahren nach einem der vorhergehenden Ansprüche, bei dem der jeweilige Maximalabstand auf Basis einer durch einen Benutzer getroffenen Detailniveau-Einstellung vorbestimmt wird.

5. Verfahren nach einem der vorhergehenden Ansprüche, wobei eine Komponente (2, 4, 18, 20), deren zugeordneter Knoten (28, 30, 32, 34) ein Elternknoten des der Fokuskomponente zugeordneten Knotens (28, 30, 32, 34) ist, in dem Bild (16, 22, 40) nur im Grundriß oder Umriß dargestellt wird.

6. Verfahren nach einem der vorhergehenden Ansprüche, bei dem während des Ladens einer ersten Komponente (2, 4, 18, 20) aus der Szene, deren zugeordneter Knoten (28, 30, 32, 34) ein Kindknoten einer zweiten Komponente(2, 4, 18, 20) aus der Szene ist, die zweite Komponente (2, 4, 18, 20) gegenüber einer vorgegebenen Normaldarstellung in dem Bild (16, 22, 40) graphisch abgewandelt wird, und erst nach vollständigem Laden der ersten Komponente (2, 4, 18, 20) die zweite Komponente (2, 4, 18, 20) in der vorgegebenen Normaldarstellung dargestellt wird.

7. Verfahren nach einem der vorhergehenden Ansprüche, bei dem die Positionsdaten und Blickrichtungsdaten auf Basis der räumlichen Positionierung der Anzeigeeinheit (10) ermittelt werden.

8. Verfahren nach einem der vorhergehenden Ansprüche, bei dem eine Anzahl von Kategorien definiert wird und einer Anzahl von Knoten (28, 30, 32, 34) der Baumstruktur (24) eine oder mehrere Kategorien zugeordnet werden,
wobei aus der Szene nur diejenigen Komponenten (2, 4, 18, 20) des Teils der Automatisierungsanlage (1) für das Rendern in den Prozessor geladen werden, deren jeweils zugeordnete Knoten (28, 30, 32, 34) einer vorgegebenen Kategorie zugeordnet sind.

9. Verfahren nach einem der vorhergehenden Ansprüche, bei dem nach jeder Änderung der Positionsdaten oder der Blickrichtungsdaten durch eine Benutzereingabe die Verfahrensschritte des Renderns und des Darstellens erneut durchgeführt werden.

10. Verfahren nach Anspruch 9, bei dem während des Renderns eine Leistungskenngröße für den Prozessor ermittelt wird, wobei bei der nächsten Durchführung des Renderns der jeweilige Maximalabstand auf Basis der Leistungskenngröße vorbestimmt wird.

11. Verfahren nach Anspruch 9 oder 10, bei dem die Anzeigeeinheit (10) berührungsempfindlich ist und ein Bildschirmrandbereich (36, 38) vorgesehen wird, und wobei bei einer horizontalen Berührungseingabe im Bildschirmrandbereich (36, 38) eine longitudinale Veränderung der Blickrichtungsdaten durchgeführt wird und/oder einer vertikalen Berührungseingabe im Bildschirmrandbereich eine latidudinale Veränderung der Blickrichtungsdaten durchgeführt wird.

12. Verfahren nach Anspruch 11, wobei der Bildschirmrandbereich (36, 38) einen horizontalen und einen vertikalen Balkenbereich (36, 38) umfasst, wobei die horizontale Berührungseingabe im horizontalen Balkenbereich (38) erfolgt und die vertikale Berührungseingabe im vertikalen Balkenbereich (36) erfolgt.

13. Computerprogrammprodukt, welches Softwarecodeabschnitte umfasst, die, wenn sie auf einem Prozessor ausgeführt werden, den Prozessor zum Ausführen des Verfahrens nach einem der vorhergehenden Ansprüche veranlassen.

14. Leitsystem (6) für eine Automatisierungsanlage (1), umfassend einen Prozessor und eine Anzeigeeinheit (10), wobei auf dem Prozessor das Verfahren nach einem der Ansprüche 1 bis 12 ausgeführt wird.

15. Leitsystem (6) nach Anspruch 14, dessen Anzeigeeinheit (10) auf einer mobilen, mit der Automatisierungsanlage (1) und/oder weiteren Komponenten des Leitsystems (6) durch eine drahtlose Kommunikationsverbindung (14) verbundenen Einheit (12) angeordnet ist.

## Claims

1. A method for controlling an automation system (1), comprising:
rendering, by a processor, an image (16, 22, 40) from a three-dimensional scene representing at least part of the automation system (1) on the basis of position data and viewing direction data,
displaying the image (16, 22, 40) on a display unit (10),
wherein the automation system (1) comprises a plurality of components (2, 4, 18, 20),
wherein a tree structure (24) is stored in a data memory in which nodes (28, 30, 32, 34) are assigned to the components (2, 4, 18, 20) of the automation system (1),
**characterized in that** a focus component is determined, wherein the focus component describes a component which currently is the focus of the user, and from the scene only those components (2, 4, 18, 20) of the part of the automation system (1) are loaded into the processor for rendering whose assigned nodes (28, 30, 32, 34) in the tree structure (24) have only a predetermined maximum distance from the node (28, 30, 32, 34) assigned to the focus component.

2. The method according to claim 1, wherein the focus component is determined from a user input.

3. The method according to one of the preceding claims, wherein different maximum distances are predetermined for parent and child nodes of the node (28, 30, 32, 34) assigned to the focus component.

4. The method according to one of the preceding claims, wherein the respective maximum distance is predetermined on the basis of a detail level setting made by a user.

5. The method according to one of the preceding claims, wherein a component (2, 4, 18, 20) whose assigned node (28, 30, 32, 34) is a parent node of the node (28, 30, 32, 34) assigned with the focus component is represented in the image (16, 22, 40) only as a contour or a footprint.

6. The method according to one of the preceding claims, wherein during loading of a first component (2, 4, 18, 20) from the scene whose assigned node (28, 30, 32, 34) is a child node of a second component (2, 4, 18, 20) from the scene, the second component (2, 4, 18, 20) is graphically changed in the image (16, 22, 40) compared to a predetermined normal representation, and only after the first component (2, 4, 18, 20) has been completely loaded, the second component (2, 4, 18, 20) is displayed in the predetermined normal representation.

7. The method according to one of the preceding claims, wherein the position data and viewing direction data are determined on the basis of the spatial positioning of the display unit (10).

8. The method according to one of the preceding claims, wherein a number of categories is defined and one or more categories are assigned to a number of nodes (28, 30, 32, 34) of the tree structure (24),
where only those components (2, 4, 18, 20) of the part of the automation system (1) are loaded into the processor for rendering from the scene whose respectively assigned nodes (28, 30, 32, 34) are assigned to a predefined category.

9. The method according to any of the preceding claims, wherein after each change of position data or viewing direction data by user input, the rendering and display method steps are performed newly.

10. The method according to claim 9, in which a performance parameter for the processor is determined during rendering, wherein during the next time the rendering is performed the respective maximum distance is predetermined on the basis of the performance parameter.

11. The method according to claim 9 or 10, in which the display unit (10) is touch-sensitive and a screen edge region (36, 38) is provided, and wherein a longitudinal change in the viewing direction data is performed at a horizontal touch input in the screen edge region (36, 38) and/or a latitudinal change in the viewing direction data is performed at a vertical touch input in the screen edge region.

12. The method according to claim 11, wherein the screen edge region (36, 38) comprises a horizontal and a vertical bar region (36, 38), wherein the horizontal touch input is in the horizontal bar region (38) and the vertical touch input is in the vertical bar region (36).

13. A computer program product comprising software code sections which, when executed on a processor, cause the processor to perform the method according to any of the preceding claims.

14. A control system (6) for an automation system (1), comprising a processor and a display unit (10), wherein the method according to one of claims 1 to 12 is performed on the processor.

15. The control system (6) according to claim 14, whose display unit (10) is arranged on a mobile unit (12) connected to the automation system (1) and/or other components of the control system (6) by a wireless communication link (14).

## Revendications

1. Un procédé de commande d'un système d'automatisation (1), comprenant :
le rendu, au moyen d'un processeur, d'une image (16, 22, 40) d'une scène tridimensionnelle représentant au moins une partie du système d'automatisation (1) à partir de données de position et de direction d'observation,
l'affichage de l'image (16, 22, 40) sur une unité d'affichage (10),
dans lequel le système d'automatisation (1) comprend une pluralité de composants (2, 4, 18, 20), dans laquelle une arborescence (24) est stockée dans une mémoire de données dans laquelle des nœuds (28, 30, 32, 34) sont affectés aux composants (2, 4, 18, 20) du système d'automatisation (1),
**caractérisé en ce que** dans lequel un composant de focalisation est déterminé, dans lequel le composant de focalisation décrit un composant qui est couramment la focalisation de l'utilisateur, et sont seuls chargés par le processeur les composants de la scène (2, 4, 18, 20) de la partie du système d'automatisation pour le rendu de ces nœuds affectés (28, 30, 32, 34) dans l'arborescence (24) qui ont seuls une distance maximale prédéterminée du nœud (28, 30, 32, 34) affecté au composant de focalisation.

2. Le procédé selon la revendication 1, dans lequel le composant de focalisation est déterminé à partir d'une entrée utilisateur.

3. Le procédé selon l'une des revendications précédentes, dans lequel différentes distances maximales sont prédéterminées pour les nœuds parents et enfants du nœud (28, 30, 32, 34) affecté au composant de focalisation.

4. Le procédé selon l'une des revendications précédentes, dans lequel la distance maximale respective est prédéterminée sur la base d'un réglage de niveau de détail effectué par un utilisateur.

5. Le procédé selon l'une des revendications précédentes, dans lequel un composant (2, 4, 18, 20) dont le nœud affecté (28, 30, 32, 34) est un nœud parent du nœud (28, 30, 32, 34) affecté au composant de focalisation, est représenté dans l'image (16, 22, 40) seulement en contour ou par empreinte.

6. Le procédé selon l'une des revendications précédentes, dans lequel, lors du chargement d'un premier composant (2, 4, 18, 20) de la scène dont le nœud affectué (28, 30, 32, 34) est un nœud enfant d'un second composant (2, 4, 18, 20) de la scène, le second composant (2, 4, 18, 20) est changé graphiquement dans l'image (16, 22, 40) par comparaison à une représentation normale prédéterminée, et seulement après que le premier composant (2, 4, 18, 20) ait été chargé, le second composant (2, 4, 18, 20) est affiché dans la représentation normale prédéterminée.

7. Le procédé selon l'une des revendications précédentes, dans lequel les données de position et les données de direction d'observation sont déterminées sur la base du positionnement spatial de l'unité d'affichage (10).

8. Le procédé selon l'une des revendications précédentes, dans lequel un certain nombre de catégories sont définies et une ou plusieurs catégories sont affectées à un certain nombre de nœuds (28, 30, 32, 34) de la structure arborescente (24), dans laquelle sont seuls chargés dans le processeur les composants (2, 4, 18, 20) de la partie du système d'automatisation (1) pour le rendu de la scène des nœuds affectés respectivement (28, 30, 32, 34) sont affectés à une catégorie prédéterminée.

9. Le procédé selon l'une des revendications précédentes, dans lequel après chaque modification des données de position ou des données de direction d'observation par une entrée d'utilisateur, les étapes de procédé de rendu et d'affichage sont à nouveau exécutées.

10. Le procédé selon la revendication 9, dans lequel un paramètre d'exécution pour le processeur est déterminé durant le rendu, dans lequel temps suivant de l'exécution du rendu, la distance maximale respective est prédéterminée sur la base du paramètre d'exécution.

11. Le procédé selon la revendication 9 ou 10, dans lequel l'unité d'affichage (10) est tactile et une zone de bord d'écran (36, 38) est prévue, et dans lequel, un changement longitudinal dans les données de direction d'observation est effectué à une entrée tactile horizontale dans la zone de bord d'écran (36, 38) et/ou une changement latitudinal dans les données de direction d'observation est effectué à une entrée tactile verticale dans la zone de bord d'écran.

12. Le procédé selon la revendication 11, dans lequel la zone de bord d'écran (36, 38) comprend une zone de barre horizontale et une zone de barre verticale (36, 38), l'entrée tactile horizontale est dans la zone de barre horizontale (38) et l'entrée tactile verticale étant dans la zone de barre verticale (36).

13. Un produit de programme informatique qui comprend des sections de code logiciel qui, lorsqu'elles sont exécutées sur un processeur, amènent le processeur à exécuter le procédé selon l'une des revendications précédentes.

14. Un système de commande (6) d'un système d'automatisation (1), comprenant un processeur et une unité d'affichage (10), dans lequel le procédé selon l'une des revendications 1 à 12 est exécuté par le processeur.

15. Le système de commande (6) selon la revendication 14, dont l'unité d'affichage (10) est disposée sur une unité mobile (12) reliée au système d'automatisation (1) et/ou par un lien de communication sans fil (14) à d'autres composants du système de commande (6).
